# EUROPEAN PATENT APPLICATION

(11) **EP 2 860 495 A1**
(43) Date of publication of application: **15.04.2015**
(21) Application number: 13801349.5
(22) Date of filing: 06.06.2013
(51) Int. Cl.: G01D 5/12

(54) **ANGULAR SENSOR**

(30) Priority: 07.06.2012 JP 2012129972
(71) Applicant: Mikuni Corporation, Tokyo 101-0021 (JP)
(72) Inventor: FUJITANI, Toshiaki, Odawara-shi, Kanagawa 250-0055 (JP)
(74) Representative: Schäfer, Matthias W.
(86) International application number: PCT/JP2013/065739
(87) International publication number: WO 2013/183724

(57) **Abstract**

The problem to be solved is to provide an angular sensor where deterioration in detection accuracy or occurrence of erroneous detection due to influence of an external magnetic field is reduced. An angular sensor 1 which detects a rotation angle of an object includes a magnet 12 which is rotated according to the object and a magnetic sensor 11 which detects the rotation angle of the magnet based on a change in magnetic field generated by from magnet, wherein a direction of an external magnetic field which is a magnetic field other than the magnetic field of the magnet and a direction of the magnetic field generated by the magnet in a rotation range where the magnet is rotated are set to have an angle of less than 90 degrees.

## Description

### [Technical Field]

The present invention relates to an angular sensor.

### [Background Art]

Patent Literature 1 discloses a technique regarding a magnetic angular sensor capable of maintaining a high level of angle detection accuracy by preventing magnetic dust from intruding into an air gap of a magnet.

### [Citation List]

### [Patent Literature]

[PTL 1] JP 2009-19926 A

### [Summary of Invention]

### [Technical Problem]

However, in the technique disclosed in Patent Literature 1, dust-proofing of a sensor IC is achieved by filling an inner portion of a case configured with a non-magnetic material such as a resin with a filling material such as a non-magnetic resin. In this case, since the sensor IC is retained by the non-magnetic filling material and the non-magnetic case, the external magnetic field easily passes through the material and the case. Therefore, there is a problem in that, due to the influence of the external magnetic field, detection accuracy of the sensor IC is deteriorated, or erroneous detection occurs.

In terms of the above-described problems, the present invention is to provide an angular sensor where deterioration in detection accuracy or occurrence of erroneous detection due to influence of an external magnetic field is reduced.

### [Solution to Problem]

In order to solve the above-described problems , according to an aspect of the present invention, there is provided an angular sensor which detects a rotation angle of an object, including: a magnet which is rotated according to the object; and a magnetic sensor which detects the rotation angle of the magnet based on a change in a magnetic field generated by the magnet. Here, the magnetic field generated by the magnet, in a rotation range where the magnet is rotated, is oriented at an angle of less than 90 degrees with respect to a direction of an external magnetic field which is a magnetic field other than the magnetic field of the magnet.

According to the configuration, it is possible to reduce deterioration in detection accuracy or occurrence of erroneous detection due to influence of the external magnetic field.

According to another aspect of the present invention, in addition to the above aspect, the external magnetic field includes at least a magnetic field having one direction, a central angle of rotation of the magnet and the external magnetic field are set to be parallel to each other, and the rotation angle of the magnet is set to be in a range of less than +/- 90 degrees from the central angle of rotation.

According to the configuration, in a case where the external magnetic field has one direction, it is possible to reliably reduce deterioration in detection accuracy or occurrence of erroneous detection due to influence of the external magnetic field.

According to still another aspect of the present invention, in addition to the above aspect, the external magnetic field includes at least magnetic fields of two directions which are perpendicular to each other, a central angle of rotation of the magnet is set to have an angle of 45 degrees with respect to each of the perpendicular external magnetic fields, and the rotation angle of the magnet is set to be in a range of less than +/- 45 degrees from the central angle of rotation.

According to the configuration, in a case where the external magnetic field has two directions, it is possible to reliably reduce deterioration in detection accuracy or occurrence of erroneous detection due to influence of the external magnetic field.

### [Advantageous Effects of Invention]

According to the present invention, it is possible to provide an angular sensor where deterioration in detection accuracy or occurrence of erroneous detection due to influence of an external magnetic field is reduced.

### [Brief Description of Drawings]

[Fig. 1A] Fig. 1A is a diagram illustrating an example of a configuration of a first embodiment of the present invention.
[Fig. 1B] Fig. 1B is a diagram illustrating an example of a configuration of a first embodiment of the present invention.
[Fig. 2A] Fig. 2A is a diagram illustrating an external magnetic field of the first embodiment illustrated in Figs. 1A and 1B.
[Fig. 2B] Fig. 2B is a diagram illustrating an external magnetic field of the first embodiment illustrated in Figs. 1A and 1B.
[Fig. 3] Fig. 3 is a diagram for explaining operations of the first embodiment.
[Fig. 4] Fig. 4 is a diagram for explaining operations of the first embodiment.
[Fig. 5] Fig. 5 is a schematic diagram for explaining effects of the first embodiment.
[Fig. 6] Fig. 6 is a schematic diagram for explaining effects of the first embodiment.
[Fig. 7] Fig. 7 is a schematic diagram for explaining effects of the first embodiment.
[Fig. 8] Fig. 8 is a graph for explaining effects of the first embodiment.
[Fig. 9} Fig. 9 is a graph for explaining effects of the first embodiment.
[Fig. 10A] Fig. 10A is a diagram for explaining a configuration of a second embodiment.
[Fig. 10B] Fig. 10B is a diagram for explaining a configuration of a second embodiment.

### [Description of Embodiments]

Hereinafter, embodiments of the present invention will be described.

### (A) Explanation of First Embodiment

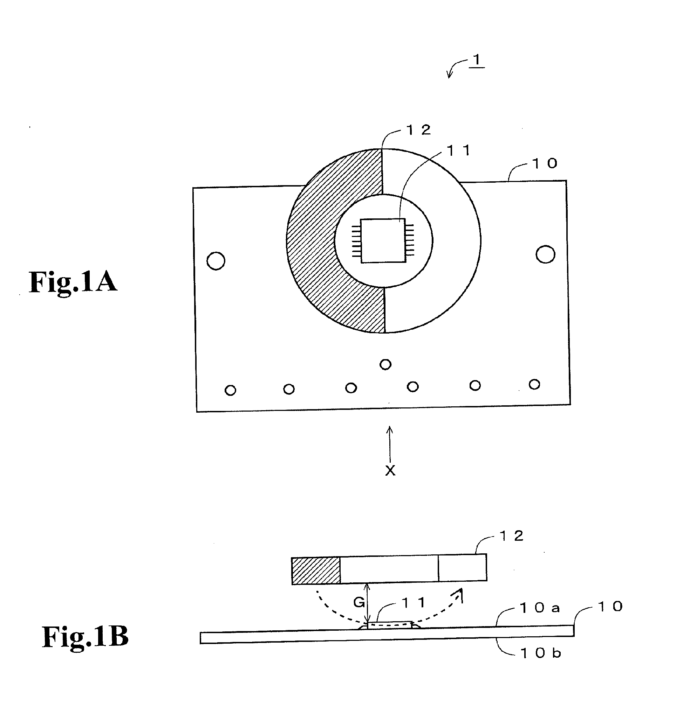

Figs. 1A and 1B are diagrams illustrating an example of a configuration of an angular sensor according to a first embodiment of the present invention. In addition, Fig. 1A is a top diagram of the first embodiment, and Fig. 1B is a side diagram as Fig. 1A is viewed from an X direction. As illustrated in Figs. 1A and 1B, in the first embodiment, an angular sensor 1 is configured to include a board 10, a sensor integrated circuit (IC) 11, and a magnet 12.

Herein, the board 10 is configured with a plate-shaped insulating member such as glass epoxy or bakelite. The sensor IC 11 is installed on a front surface 10a of the board 10. In addition, a rear surface 10b is arranged and fixed, for example, to face an inner surface of a case (not shown).

The sensor IC 11 includes, for example, a plurality of Hall elements to detect the direction of a magnetic field generated by the magnet 12 by using the Hall elements. Since the magnet 12 is rotated according to an obj ect of which rotation angle is to be detected, the sensor IC 11 is able to detect the rotation angle of the object by detecting the direction of the magnetic field generated by the magnet 12.

The magnet 12 is formed with a permanent magnet having, for example, an annular shape to be rotatably pivoted on a center of the annular shape as a shaft and to be locked to the object (not shown). Therefore, the magnet 12 is rotated in conjunction with the rotation of the object. The magnet 12 is separated by a predetermined distance G from the sensor IC 11, which is arranged to face the magnet 12. In addition, the magnet and the sensor IC are arranged so that the center of rotation of the magnet 12 is coincident with the position of the center of the sensor IC 11. In the example of Figs. 1A and 1B, the magnet 12 is configured so that the hatched portion (the left half portion of the annular ring illustrated in Figs. 1A and 1B) becomes the N pole and the unhatched portion becomes the S pole. In addition, as the shape of the magnet 12 , instead of the annular shape, a magnet having a cylindrical shape may also be used. As indicated by a broken-line arrow in the figure of Fig. 1B, the magnetic field emitted from the N pole of the magnet 12 passes through the sensor IC 11 to return to the S pole.

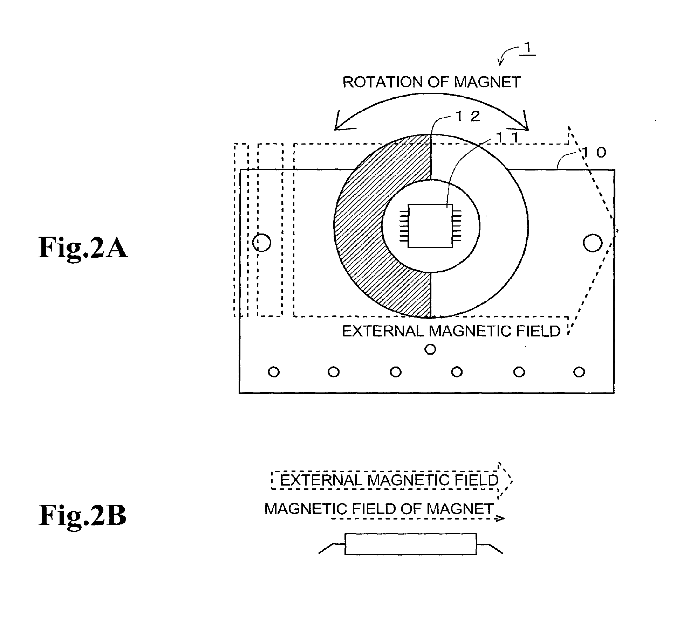

Figs. 2A and 2B are diagrams illustrating a state of an external magnetic field. As illustrated Figs. 1A and 1B described above, the magnetic field of the magnet 12 is generated in the direction directing from the N pole to the S pole (in the direction from the left side to the right side in the figure). On the other hand, as indicated by a broken-line arrow in Figs. 2A and 2B, the external magnetic field generated by things other than the magnet 12 (for example, the magnetic field generated by members, parts, or the like arranged near the angular sensor 1) is set so as to be directed from the left side to the right side in the figure. More specifically, in a case where the positions of the members or the like generating the external magnetic field are adjustable, the external magnetic field may be set so as to be directed in the direction illustrated in Figs. 2A and 2B by adjusting the arrangement positions of the members. In addition, in a case where the positions of the members or the like generating the external magnetic field is not adjustable, the external magnetic field is set to have the position relationship by adjusting the installation direction of the angular sensor 1.

Fig. 2B is a diagram illustrating a relationship between a magnetic field generated by the magnet 12 in a central angle of rotation and an external magnetic field. As illustrated in the figure, the magnetic field generated by the magnet 12 in the central angle of rotation and the external magnetic field are set so as to be substantially parallel to each other. In addition, the central angle of rotation denotes an average angle which becomes the center of movement of the magnet 12 during the operation of the angular sensor 1, and the magnet 12 is rotated clockwise or counterclockwise around the central angle of rotation. For example, in the case of applying the angular sensor 1 to a sensor for detecting a degree of opening of a throttle valve which regulates an air flow amount supplied to an engine of a vehicle, during the stoppage of engine, the throttle valve is at the closed position, and during the driving, the throttle valve is opened and closed around the average degree of opening. Therefore, the average degree of opening is used as the central angle of rotation, and the magnetic field generated by the magnet 12 in the central angle of rotation and the external magnetic field are set to be substantially parallel to each other.

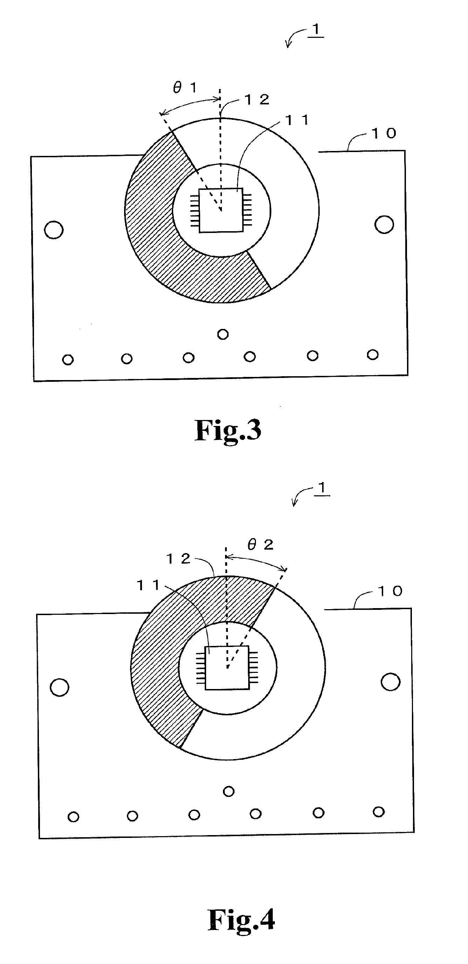

Figs. 3 and 4 are diagrams illustrating angles of rotation of the magnet 12 according to the object. As illustrated in Fig. 3, the maximum angle of counterclockwise rotation of the magnet 12 from the central angle of rotation becomes θ1; and as illustrated in Fig. 4, the maximum angle of clockwise rotation of the magnet 12 from the central angle of rotation becomes θ2. The angles θ1 and θ2 are set so that θ1, θ2 < 90 degrees. Namely, the direction of the magnetic field generated by the magnet 12 in the rotation range (range of θ1 to θ2) where the magnet 12 is rotated and the direction of the external magnetic field are set to have an angle of less than 90 degrees. In addition, although there is a case where the magnet is rotated to an angle exceeding 90 degrees, if the case occurs at a low frequency, the case may be not taken into consideration.

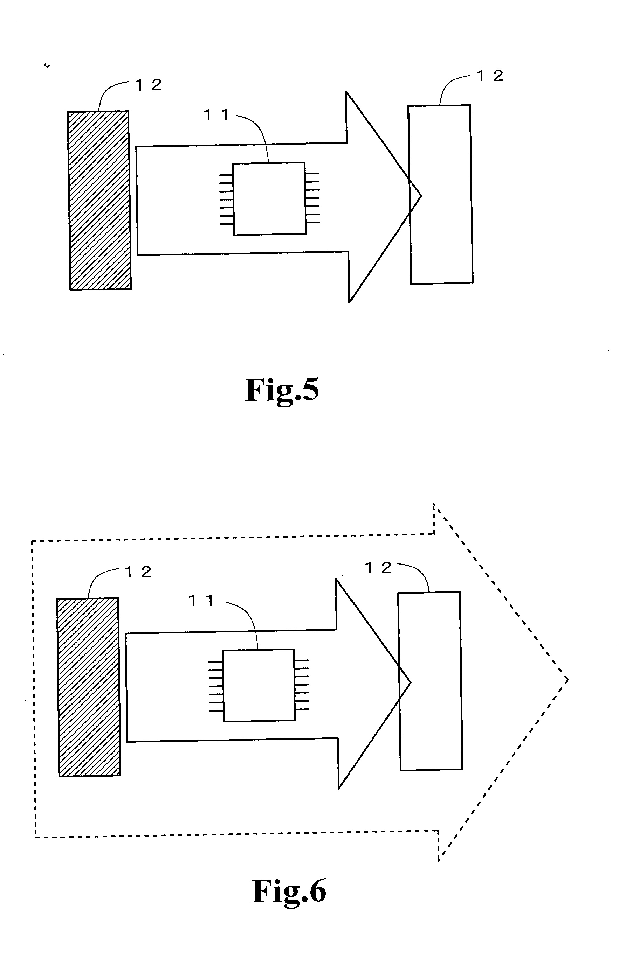

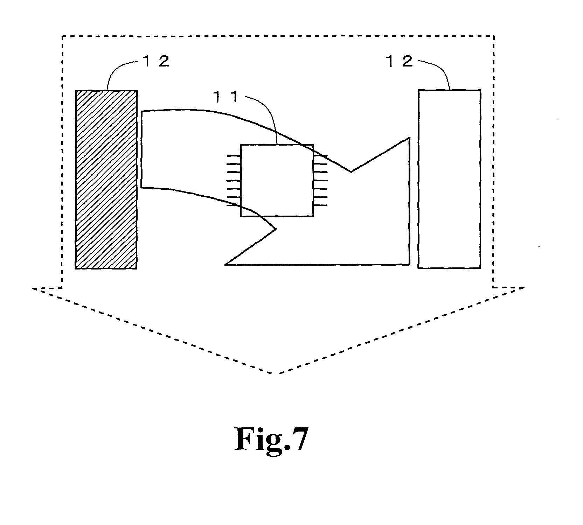

In this manner, by setting the direction of the magnetic field generated by the magnet 12 in the central angle of rotation and the direction of the' external magnetic field to be substantially parallel to each other and by setting the rotation angle to be in a range of less than +/- 90 degrees from the central angle, it is possible to reduce the influence of the external magnetic field on the sensor IC 11. Namely, in a case where the magnet 12 is schematically illustrated and the magnetic field being directed from the N pole of the magnet 12 to the S pole is indicated by a solid-line arrow as illustrated in Fig. 5, and in a case where the external magnetic field indicated by a broken-line arrow is parallel to the magnetic field of the magnet 12 as illustrated in Fig. 6, the direction of the magnetic field of the magnet 12 is not influenced by the external magnetic field. However, in a case where the external magnetic field is perpendicular to the magnetic field of the magnet 12 as illustrated in Fig. 7, the direction of the magnetic field of the magnet 12 is changed due to the influence of the external magnetic field. For this reason, the detection angle of the sensor IC 11 is different from the actual angle, and this difference leads to erroneous detection.

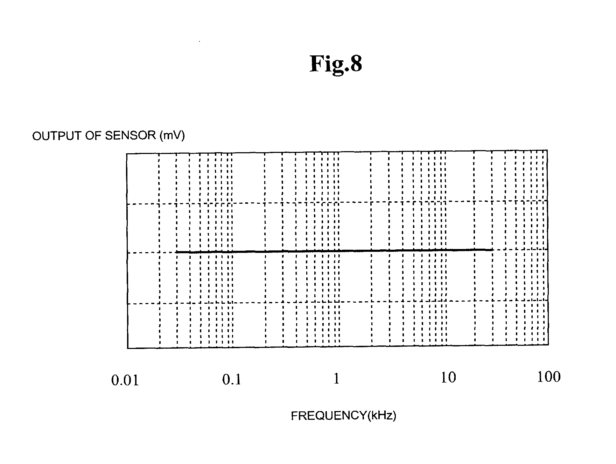

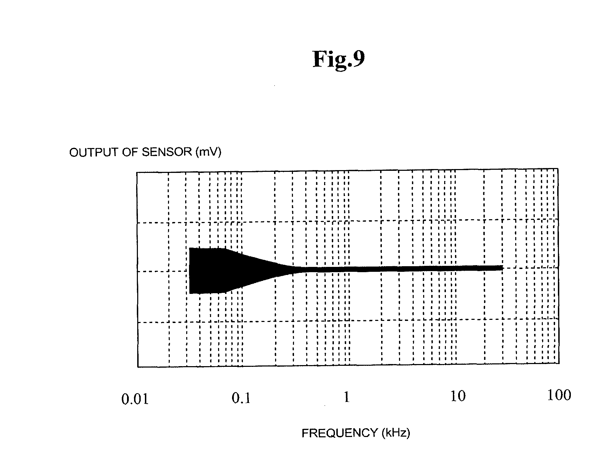

Fig. 8 illustrates an output voltage (mV) of the sensor IC 11 when an alternating voltage is applied to a Helmholtz coil in a case where the Helmholtz coil is arranged so as to interpose the magnet 12 of the embodiment illustrated in Figs. 1A and 1B and the magnetic field generated by the Helmholtz coil and the magnetic field generated by the magnet 12 are set to be parallel to each other. On the other hand, Fig. 9 illustrates the output voltage of the sensor IC 11 when the alternating voltage is applied to the Helmholtz coil in a case where the magnetic field generated by the Helmholtz coil and the magnetic field generated by the magnet 12 are set to be perpendicular to each other. From the comparison of the figures, in a case where the magnetic field generated by the Helmholtz coil and the magnetic field generated by the magnet 12 are parallel to each other as illustrated in Fig. 8, the output voltage of the sensor IC 11 is not changed regardless of frequency. However, in a case where the magnetic field generated by the Helmholtz coil and the magnetic field generated by the magnet 12 are perpendicular to each other as illustrated in Fig. 9, the output voltage of the sensor IC 11 is changed particularly in a low frequency range (300 Hz or less) where the sensitivity of the sensor IC 11 is relatively high. Namely, it can be understood that, in a case where the external magnetic field generated by the Helmholtz coil and the magnetic field generated by the magnet 12 are parallel to each other, the output voltage of the sensor IC 11 is not easily influenced by the external magnetic field.

Namely, as described heretofore, according to the first embodiment of the present invention, by setting the direction of the magnetic field of the magnet 12 in the central angle of rotation and the direction of the external magnetic field to be substantially parallel to each other and by setting the rotation angle of the magnet 12 to be in a range of less than +/- 90 degrees from the central angle of rotation, it is possible to make the influence of the external magnetic field small.

In addition, in the first embodiment, by setting the direction of the external magnetic field and the direction of the magnet 12, the influence of the external magnetic field becomes small, and thus, any new part does not need to be added, so that it is possible to prevent the increase in cost and the increase in assembling workload. For example, as a method of shielding the external magnetic field, there is a method where members having a high permeability are arranged. However, since such members having a high permeability have a large weight, if the members are arranged at positions far from the sensor IC 11, vibration resistance is deteriorated. In addition, the members having a high permeability are generally expensive. Therefore, by omitting the use of such members having a high permeability, it is possible to increase the vibration resistance and to reduce the production cost.

### (B) Explanation of Second Embodiment

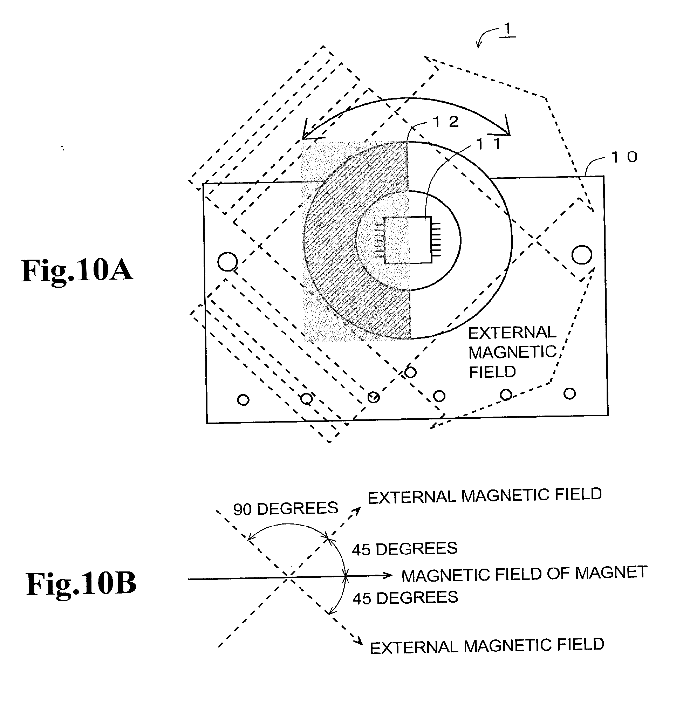

Fig. 10A is a diagram illustrating an example of a configuration of a second embodiment of the present invention. In addition, in comparison with Fig. 1A, Fig. 10A is different from Fig. 1A in terms of the number of external magnetic fields and the directions thereof, but the other configurations are the same as those of Fig. 1A. In the second embodiment illustrated in Fig. 10A, the directions of the two external magnetic fields indicated by broken-line arrows are set to be substantially perpendicular to each other, and the central angle of rotation of the magnet 12 is set to be 45 degrees with respect to the two magnetic fields. Namely, as illustrated in Fig. 10B, the two external magnetic fields are set to be perpendicular to each other, and the external magnetic fields and the central angle of rotation of the magnet 12 are set to have an angle of 45 degrees. In addition, in the second embodiment, the rotation angle of the magnet 12 is in a range of +/- 45 degrees from the central angle of rotation. Namely, in the second embodiment, the angles in Figs. 3 and 4 are set so that θ1, θ2 < 45 degrees. Therefore, in the rotation range where the magnet 12 is rotated, the direction of the magnetic field generated by the magnet 12 and each of the directions of the external magnetic fields are set to have an angle of less than 90 degrees.

As described above in the first embodiment, in a case where the magnetic field of the magnet 12 and the external magnetic field are perpendicular to each other, the sensor IC 11 is most influenced by the external magnetic field. Therefore, by setting the external magnetic fields illustrated in Figs. 10A and 10B and the magnetic field of the magnet 12 in the central angle of rotation to have an angle of 45 degrees and by setting the rotation angle of the magnet 12 to be in a range of less than +/- 45 degrees from the central angle, even in a case where the magnet is rotated to the maximum, the magnetic field of the magnet 12 and the external magnetic fields are able to be set to have an angle of less than 90 degrees, so that it is possible to make the influence of the external magnetic fields small. In addition, although there is a case where the magnet is rotated to an angle exceeding 45 degrees, if the case occurs at a low frequency, the case may be not taken into consideration.

As described heretofore, in the second embodiment, by setting the direction of the magnetic field of the magnet 12 in the central angle of rotation and each of the directions of the two perpendicular magnetic fields to have an angle of 45 degrees and by setting the rotation angle of the magnet 12 to be in a range of less than +/- 45 degrees from the central angle of rotation, it is possible to make the influence of the external magnetic fields small.

In addition, similarly to the case of the first embodiment, in the second embodiment, by setting the directions of the two external magnetic fields and the direction of the magnet 12, the influence of the external magnetic fields becomes small, and thus, any additional part is needed, so that it is possible to prevent the increase in cost and the increase in assembling workload. For example, as a method of shielding the external magnetic fields, there is a method where members having a high permeability are arranged. However, since such member having a high permeability have a large weight, if the members are arranged at positions far from the sensor IC 11, vibration resistance is deteriorated. In addition, the members having a high permeability are generally expensive. Therefore, by omitting the use of such members having a high permeability, it is possible to increase the vibration resistance and to reduce the production cost.

### (C) Explanation of Modified Embodiment

The above-described embodiments are exemplary ones. It should be noted that the present invention is not limited to the above-described embodiments. For example, in each of the above-described embodiments, an annular magnet 12 is used. However, other shapes may be used. For example, a magnet having a cylindrical shape may be used, or a magnet having a polygonal shape may be used.

In addition, in each of the above-described embodiments, the magnet 12 is configured to be rotated according to the obj ect. However, for example, the sensor IC 11 may be configured to be rotated according to the object.

In addition, in each of the above-described embodiments, the cases where one or two external magnetic fields are arranged are exemplified. However, even in a case where three or more external magnetic fields are arranged, the present invention may be applied. For example, one or two strongest magnetic fields are selected, and the present invention may be applied to the magnetic fields.

### [Reference Signs List]

1: Angular sensor
10: Board
11: Sensor IC
12: magnet

## Claims

1. An angular sensor which detects a rotation angle of an object, comprising:
a magnet which is rotated according to the object; and
a magnetic sensor which detects the rotation angle of the magnet based on a change in a magnetic field generated by the magnet,
the magnetic field generated by the magnet, in a rotation range where the magnet is rotated, being oriented at an angle of less than 90 degrees with respect to a direction of an external magnetic field which is a magnetic field other than the magnetic field of the magnet.

2. The angular sensor according to claim 1,
wherein the external magnetic field includes at least a magnetic field having one direction, and
wherein a central angle of rotation of the magnet and the external magnetic field are set to be parallel to each other, and the rotation angle of the magnet is set to be in a range of less than +/- 90 degrees from the central angle of rotation.

3. The angular sensor according to claim 1,
wherein the external magnetic field includes at least two magnetic fields which are perpendicular to each other, and
a central angle of rotation of the magnet and each of the perpendicular external magnetic fields are set to have an angle of 45 degrees, and the rotation angle of the magnet is set to be in a range of less than +/- 45 degrees from the central angle of rotation.
